# EUROPÄISCHE PATENTSCHRIFT

(11) **EP 1 476 404 B1**
(45) Veröffentlichungstag und Bekanntmachung des Hinweises auf die Patenterteilung: **13.03.2013**
(21) Anmeldenummer: 02716618.0
(22) Anmeldetag: 23.02.2002
(51) Int. Cl.: C02F 11/00, C05F 7/00

(54) **VERFAHREN ZUM HYGIENISIEREN EINES ORGANISCHEN RESTSTOFFS DURCH EINE ERHÖHUNG DES PH-WERTS UND/ODER DER TEMPERATUR**
METHOD FOR SANITIZING AN ORGANIC RESIDUE BY AN INCREASE IN PH VALUE AND/OR TEMPERATURE
PROCEDE D'HYGIENISATION D'UN SOUS-PRODUIT ORGANIQUE PAR AUGMENTATION DE LA VALEUR DU PH ET/OU DE LA TEMPERATURE

(43) Veröffentlichungstag der Anmeldung: 17.11.2004
(73) Patentinhaber: TSP GmbH, 70794 Filderstadt-Bernhausen (DE)
(72) Erfinder: BUX, Markus, Dr., 72124 Pliezhausen (DE)
(74) Vertreter: Gassner, Wolfgang
(86) Internationale Anmeldenummer: PCT/DE2002/000675
(87) Internationale Veröffentlichungsnummer: WO 2003/072514

(56) Entgegenhaltungen:
- EP-A- 0 557 078
- GB-A- 2 285 043
- US-A- 3 966 450
- US-A- 5 125 951

## Beschreibung

Die Erfindung betrifft ein Verfahren zum Hygienisieren eines organischen Reststoffs durch eine Erhöhung des pH-Werts und/oder der Temperatur. Sie betrifft darüber hinaus eine Verwendung einer Trocknungsvorrichtung und einer Misch- oder Wendevorrichtung in einem solchen Verfahren.

Der organische Reststoff kann Schlamm, insbesondere Klärschlamm, tierische oder humane Exkremente, Kompost oder eine Dispersion bzw. Suspension, insbesondere ein Abwasser, enthalten. Ein solcher organischer Reststoff enthält üblicherweise eine große Zahl von für Tiere und Menschen pathogenen Erregern, wie Viren, Bakterien, insbesondere coliforme Keime und Salmonellen, Protozoen und Wurmeier, Unter Hygienisieren wird eine Reduktion der Zahl der pathogenen Erreger auf eine in bezug auf die jeweilige Anwendung, bspw. Düngung, unschädliche Zahl verstanden. Wird es nicht durchgeführt können Menschen und Tiere direkt oder indirekt mit einer gesundheitsschädlichen Zahl dieser Erreger belastet werden. Eine direkte Belastung kann bspw. durch Kontakt mit einem mit dem organischen Reststoff gedüngten Boden erfolgen. Zu einer indirekten Belastung kann es bspw. durch auf einem solchen Boden angebautes Gemüse kommen.

Im Stand der Technik ist es bekannt, organische Reststoffe durch Erwärmung zu hygienisieren. In Environmental Protection Agency, Guide 625/R-92-013. Environmental Regulations and Technology - Control of Pathogens and Vector Attraction in Sewage Sludge, Cincinnati (OH), USA (1999), Seite 29 ist für Klärschlamm der Zusammenhang zwischen der Temperatur, auf die der Klärschlamm zu erwärmen ist, der Dauer der Erwärmung und dem Grad der Hygiensierung beschrieben. Der genannte Zusammenhang gilt auch für andere organische Reststoffe.

Im Stand der Technik ist es weiterhin bekannt, Klärschlamm durch Erhöhen von dessen pH-Wert zu hygienisieren. Der pH-Wert sollte dabei einen Wert über 12 erreichen. Das kann durch den Zusatz von gebranntem oder gelöschtem Kalk oder anderen den pH-Wert steigernden Zuschlagstoffen erreicht werden. Üblicherweise wird dazu der Klärschlamm mechanisch durch Pressen oder Zentrifugieren entwässert bis er einen Trockensubstanzgehalt von 15 % bis 35 % aufweist. Beim Hygienisieren mit gebranntem Kalk werden dann pro Kilogramm Trockensubstanz 0,6 kg bis 1 kg gebrannter Kalk zugemischt. Beim Zusatz starker hochreaktionsfähiger Alkalien, wie gebranntem Kalk, kommt es außerdem zu einer Temperaturerhöhung, welche die Hygientsferung begünstigt. Ein Hygienisieren ist auch durch gleichzeitiges Erhöhen des pH-Werts und der Temperatur unter Wärmezufuhr von außen möglich.

Als nachteilig erweist sich, daß bei den bekannten Verfahren zum Hygienisieren durch die pH-Wert- und/oder Temperaturerhöhung Ammoniak gasförmig freigesetzt wird. Besonders große Mengen an Ammoniak entstehen beim Hygienisieren von anaerob, d.h. durch einen Faulprozeß, stabilisierten Klärschlämmen. Das klimawirksame Ammoniak belastet die Umwelt. Eine Absorption des freigesetzten Ammoniaks in Wasser durch eine Gaswaschvorrichtung ist aufwendig und teuer.

Aus der GB 2 285 043 A ist ein Verfahren zum Hygienisieren von entwässertem Schlamm bekannt. Dabei wird Schlamm auf einer Förderanlage durch ein geschlossenes Gebäude mit kontrollierter Frischluftzufuhr geführt, wobei dem Schlamm adsorptives Material und Kalziumsulfat zugeführt wird. Durch Zuführen von Hitze kann der Schlamm getrocknet und dabei sterilisiert werden. Zur Vermeidung der Freisetzung von Gerüchen kann dem Schlamm Aktivkohle zugesetzt werden. Dadurch wird die Emission von Ammoniak verringert.

Aus der DE 199 05 593 A1 ist ein Verfahren zur Aufbereitung von Gärresten bekannt, bei dem den Gärresten, bevor sie der Atmosphäre ausgesetzt werden, Mittel zur Unterbindung der Ammoniakemission zugegeben werden. Das Verfahren bewirkt, daß Ammonium in Form von NH₄-Kationen als Düngemittelstoff im Gärrest verbleibt. Das Mittel kann ein Zuschlagstoff sein, welcher den pH-Wert von basisch nach sauer verschiebt oder an welchem eine Bindung von NH₄-Kaffonen, insbesondere durch Adsorption, erfolgt. Es handelt sich dabei nicht um ein Verfahren zum Hygienisieren. Die vorgeschlagene pH-Wertverschiebung würde bei einer Hygienisierung durch pH-Wert-Erhöhung rückgängig gemacht und die Ammoniakemission nicht vermieden werden. Die adsorbierenden Substanzen sind schwer und müssen in einer Menge bereitgestellt werden, die einen großen, insbesondere in unterentwickelten Regionen schwer zu leistenden, logistischen Aufwand erfordert. Der Zusatz adsorbierender Substanzen kann zu einer starken Massenzunahme des Gärrestes führen, die insbesondere dann unerwünscht ist, wenn der Gärrest entsorgt werden muß. Die Entsorgungskosten richten sich üblicherweise nach der Masse des zu entsorgenden Guts. Erfolgt die Entsorgung durch spätere Verbrennung, verbleiben die in der DE 199 05 593 A1 erwähnten zur Adsorption geeigneten Zuschlagstoffe in der Asche oder im Flugstaub und erhöhen die Entsorgungskosten weiter.

Aufgabe der Erfindung ist es, die Nachteile nach dem Stand der Technik zu beseitigen. Insbesondere soll ein günstiges Verfahren zum Hygienisieren eines organischen Reststoffs bereitgestellt werden, durch das ein durch die Erhöhung des pH-Werts und/oder der Temperatur bewirktes gasförmiges Freisetzen von Ammoniak weitgehend vermieden wird.

Diese Aufgabe wird durch die Merkmale des Anspruchs 1 gelöst. Zweckmäßige Ausgestaltungen der Erfindung ergeben sich aus den Merkmalen der Ansprüche 2 bis 11.

Erfindungsgemäß ist ein Verfahren zum Hygienisieren eines organischen Reststoffs durch eine Erhöhung des pH-Werts und/oder der Temperatur vorgesehen, wobei in dem organischen Reststoff enthaltene potentiell Ammoniak bildende Stickstaffyerbindungen vor der Erhöhung des pH-Werts und/oder der Temperatur weitgehend entfernt oder umgesetzt werden.

Dabei werden dem organischen Reststoff keine Mittel zugesetzt, welche das Verbleiben von Ammonium in Form von NH₄-Kationen im organischen Reststoff bewirken. Die Erhöhung der Temperatur kann z.B. mittels Sonnenenergie erfolgen. Unter den potentiell Ammoniak bildenden Stickstoffverbindungen werden solche Stickstoffverbindungen verstanden, welche bei einer Erhöhung des pH-Werts und/oder der Temperatur zu einer Ammoniakbildung beitragen. Die Stickstoffverbindungen können Verbindungen einer einzigen Art sein, wie bspw. Ammomiumionen, welche in vielen organischen Reststoffen die wesentlichen Ammoniak bildenden Stickstoffverbindungen sind. Das Entfernen kann bspw. durch Ausgasen oder Auswaschen erfolgen. Das Umsetzen kann ein chemisches, biochemisches oder biologisches Umsetzen sein. Das chemische Umsetzen kann durch eine chemische Reaktion erfolgen, bei welcher Ammoniumionen oxidiert werden. Bei dem biochemischen Umsetzen kann es sich um eine enzymatische Reaktion mit Ammoniumionen handeln. Das biologische Umsetzen kann durch Bakterien erfolgen, welche Ammoniumionen in Nitrite oder Nitrate umwandeln. Bei den Bakterien kann es sich um in dem organischen Reststoff vorhandene oder um zu dem organischen Reststoff zugesetzte Bakterien handeln.

Überraschenderweise kann durch das erfindungsgemäße Verfahren mit verhältnlsmäßig geringem Aufwand ein durch die Erhöhung des pH-Werts oder der Temperatur bewirktes gasförmiges Freisetzen von Ammoniak weitgehend vermieden werden. Es ist damit auch zum Einsatz in wenig entwickelten Regionen gut geeignet. Es wird eine Entlastung der Umwelt beim Hygienisieren des organischen Reststoffs erreicht. Das Verfahren ist kostengünstiger als eine Abgasreinigung nach dem Freisetzen von gasförmigem Ammoniak. Der nach dem Hyglenisieren verbleibende organische Reststoff ist, sofern die potentiell Ammoniak bildenden Stickstoffverbindungen nicht entfernt worden sind, ein wertvollerer Dünger als ein herkömmlich hygienisierter organischer Reststoff. Darin enthaltener fixierter Stickstoff geht nicht in Form von gasförmigem Ammoniak verloren, sondern bleibt für Pflanzen verfügbar.

Der organische Reststoff kann vor dem Hygienisieren mechanisch entwässert werden. Dadurch verringert sich sowohl das Volumen als auch die Masse und damit der Aufwand zum Erhöhen des pH-Werts und/oder der Temperatur sowie zum Umsetzen der in dem organischen Reststoff enthaltenen potentiell Ammoniak bildenden Stickstoffverbindungen. Vorzugsweise wird dem organischen Reststoff zur Erhöhung des pH-Werts ein Zuschlagstoff, insbesondere gebrannter oder gelöschter Kalk, zugesetzt. Gebrannter und insbesondere gelöschter Kalk sind sehr kostengünstige Basen für den technischen Einsatz.

Dem organischen Reststoff kann ein das Umsetzen der potentiell Ammoniak bildenden Stickstoffverbindungen bewirkender Stoff zugesetzt werden. Bei dem Stoff kann es sich bspw. um ein Enzym oder einen die potentiell Ammoniak bildenden Stickstoffverbindungen oxidierenden Stoff handeln. Bei dem Stoff im Sinne der Erfindung kann es sich aber auch um einen Mikroorganismus handeln. Der organische Reststoff wird einer aeroben Behandlung unterzogen. Dabei wird der organische Reststoff durch Einblasen von Luft und/oder durch häufiges Wenden oder Auflockern, mit einer großen Menge Luft in Kontakt gebracht. Die aerobe Behandlung erfolgt bei einer Trocknung des organischen Reststoffs mittels Luft. Bei einer solchen Trocknung wird kalte oder erwärmte Luft über, auf oder durch den organischen Reststoff geblasen. Auch eine Belüftung des organischen Reststoffs mittels einer Wendeeinrichtung ist möglich. Das Erwärmen der Luft kann dabei mittels Sonnenenergie erfolgen. Eine dazu geeignete Vorrichtung ist die aus Stubenvoll, A., ECOregio 3 (1998), Seiten 49 - 51 bekannte solare Schlamm-Trocknungsanlage. Die aerobe Behandlung kann das Umsetzen der potentiell Ammoniak bildenden Stickstoffverbindungen durch Mikroorganismen und das Wachstum dieser Mikroorganismen begünstigen. Bei der aeroben Behandlung können die potentiell Ammoniak bildenden Stickstoffverbindungen ausgasen, wenn sie flüchtig sind und oxidiert werden, wenn sie durch Luftsauerstoff oxidierbar sind. Auch weitere die potentiell Ammoniak bildenden Stickstoffverbindungen umsetzenden Reaktionen können durch die aerobe Behandlung ablaufen oder begünstigt werden.

Bei einer vorteilhaften Ausgestaltung wird der organische Reststoff einer thermischen und/oder solaren Behandlung unterzogen. Bei der thermischen Behandlung wird der organische Reststoff erwärmt. Das kann durch eine direkte Wärmeübertragung von einem mit dem organischen Reststoff in Kontakt stehenden Wärmeträger, bspw. einem Heizblech, oder durch eine indirekte Wärmeübertragung, bspw. durch über den organischen Reststoff geleitete erwärmte Luft erfolgen. Auch eine Erwärmung durch Strahlung ist möglich. Durch die Erwärmung des organischen Reststoffs kann das Umsetzen und/oder das Ausgasen der potentiell Ammoniak bildenden Stickstoffverbindungen erreicht oder begünstigt werden. Die Erwärmung kann chemische, biochemische und biologische Reaktionen und das Wachstum von Mikroorganismen beschleunigen. Bei der solaren Behandlung wird die auf den organischen Reststoff übertragene Wärme mittels Sonnenenergie erzeugt. Bei der solaren Behandlung kann der organische Reststoff auch direkter oder indirekter Sonnenstrahlung ausgesetzt werden. Dabei kann es durch Strahlungsabsorption zu einer Erwärmung und durch die Strahlungsenergie direkt zum chemischen Umsetzen der potentiell Ammoniak bildenden Stickstoffverbindungen kommen. Die solare Behandlung kann in der oben genannten solaren Schlamm-Trocknungsanlage erfolgen. Die thermische und/oder solare Behandlung kann mit einer aeroben Behandlung des organischen Reststoffs einher gehen. Die thermische und/oder solare Behandlung weist den Vorteil auf, technisch mit einfachen Mitteln realisierbar zu sein. Bei der solaren Behandlung entstehen darüber hinaus nur geringe Betriebskosten, weil keine Brennstoffe eingesetzt werden müssen.

Der organische Reststoff wird einer Trocknung unterzogen. Die Trocknung des organischen Reststoffs verringert dessen Volumen und Gewicht. Dadurch verringert sich die zur Erhöhung des pH-Werts zuzusetzende Menge des Zuschlagstoffs, die zur Erhöhung der Temperatur erforderliche Energiemenge und die Menge des insgesamt zu entsorgenden organischen Reststoffs. Die Kosten für die erforderliche Menge des Zuschlagstoffs und der Energie sowie für die Entsorgung werden deutlich reduziert. Durch den geringeren Wassergehalt des organischen Reststoffs kann durch den Zusatz der gleichen Menge gebrannten Kalks wie bei höherem Wassergehalt eine höhere Temperatur und somit eine effizientere Hygienisierung erreicht werden. Die Trocknung kann in der oben genannten solaren Schlamm-Trocknungsanlage durchgeführt werden.

Vorzugsweise weist der organische Reststoff nach der Trocknung einen Gehalt an Trockensubstanz von 30 % bis 90 %, insbesondere 40 % bis 90 %, auf. Der Gehalt an Trockensubstanz ist auf das Gesamtgewicht bezogen. Bei einem Gehalt an Trockensubstanz unter 30 % ist das Volumen und das Gewicht des organischen Reststoffs noch zu groß. Bei einem Gehalt an Trockensubstanz über 90 % ist das gleichmäßige Einmischen eines Zuschlagstoffs nur noch schwer möglich und beim Einmischen von gebranntem Kalk als Zuschlagstoff steht nicht genügend Wasser für das Löschen zur Verfügung. Nach der Trocknung kann die Erhöhung des pH-Werts durch Zusatz von 0,05 kg bis 0,5 kg, vorzugsweise 0,1 kg bis 0,3 kg, gebranntem Kalk pro Kilogramm Trockensubstanz bewirkt werden. Diese Menge reicht zur Hygienisierung aus. Sie ist deutlich geringer als die nach der üblichen mechanischen Entwässerung ertorderliche Menge. Das Zusetzen des Zuschlagstoffs und/oder des das Umsetzen der potentiell Ammoniak bildenden Stickstoffverbindungen bewirkenden Stoffs kann durch großflächiges Vertellen auf dem organischen Reststoff und Einmischen erfolgen. Das großflächige Verteilen kann bspw. durch Aufstreuen mit einem üblichen landwirtschaftlichen Schneckenstreuer und das Einmischen mit einer Misch- und Wendevorrichtung, wie sie aus der EP 0 899 529 A2 bekannt ist, erfolgen.

Die Trocknung kann in einer Trocknungsvorrichtung bewirkt werden. Indem zum erfindungsgemaßen Hygienisieren eine herkömmliche meist ohnehin vorhandene Trocknungsvorrichtung verwendet wird, ist dazu normalerweise keine zusätzliche Anlage erforderlich. Bevorzugt wird in der Trocknungsvorrichtung das Trocknen durch die aerobe Behandlung und durch Sonnenenergie bewirkt. Eine geeignete Trocknungsvorrichtung, bei der das Trocknen durch Sonnenenergie bewirkt wird, ist die oben genannte Schlamm-Trocknungsanlage. Gegenstand der Erfindung ist auch die aerobe Behandlung durch Wenden oder Auflockern des organischen Reststoffs durch eine Misch- oder Wendevorrichtung. Eine solche z.B. aus der EP 0 899 529 A2 bekannte Misch- oder Wendevorrichtung wird üblicherweise bspw. zum Wenden beim Trocknen oder zum Einmischen eines den pH-Wert erhöhenden Zuschlagsstoffs beim Hygienisieren verwendet.

Nachfolgend wird die Erfindung anhand eines Ausführungsbeispiels näher erläutert.

Klärschlamm wird in einer Schichthöhe von 25 - 30 cm in die aus Stubenvoll, A., ECOregio 3 (1998), Seiten 49 - 51 bekannte solare Schlamm-Trocknungsanlage eingebracht. Zur Erhöhung der Trocknungsleistung wird der Klärschlamm 2 bis 10 mal täglich gewendet. Das Wenden erfolgt immer dann, wenn die oberste Schicht getrocknet ist und dadurch der Feuchtigkeitstransport von den darunterliegenden Schichten behindert wird. Das Fortschreiten der Trocknung wird durch tägliche Bestimmung des Gehalts an Trockensubstanz im Klärschlamm überwacht. Dazu wird jeweils eine Probe des Klärschlamms in einem Trockenschrank vollkommen getrocknet und deren Anteil am Gewicht der ursprünglichen Probe ermütelt. Das Fortschreiten des Hygienisierens wird durch eine regelmäßige Bestimmung der Menge coliformer Keimen überwacht. Dabei wird in einer Probe die wahrscheinlichste Anzahl von Keimen bezogen auf 4 Gramm Trockensubstanz (MPN - most probable number) bestimmt. Dazu wird eine Verdünnungsreihe der Probe in Nährmedium angefertigt und für eine vorgegebene Zeit unter Wachstumsbedingungen inkubiert. Auf der Basis der Verdünnung, bei der noch ein Wachstum der Keime zu beobachten ist, wird die ursprüngliche Keimzahl geschätzt. Weiterhin wird geprüft, ob in der Probe Salmonellen nachweisbar sind. Um die Freisetzung von gasförmigem Ammoniak zu überwachen, wird 2 cm über der Oberfläche des Klärschlamms ein zu einer Meßeinheit der Firma Dräger Sicherheitstechnik GmbH, GDS, Revalstraße 1, D-23560 Lübeck, Deutschland gehörendes Gasspürröhrchen zurAmmoniakdetektion installiert.

Bei einem am Tag 16 der Trocknung erreichten Gehalt an Trockensubstanz von 64 % wird 0,1 kg gebrannter Kalk pro kg Trockensubstanz mit einem landwirtschaftlichen Streuaggregat auf die Oberfläche des Klärschlamms gestreut und in den Klärschlamm eingemischt. Durch diese Maßnahme wird ein pH-Wert von 12,4 erreicht. Die Zahl der coliformen Keime verringert sich von ursprünglich 8,1 × 10⁶ MPN auf deutlich unter 1 × 10³ MPN. Ursprünglich vorhandene Salmonellen sind nicht mehr detektierbar. Damit ist eine ausreichende Hygienisierung erreicht. Eine Freisetzung von Ammoniak wird während des gesamten Verfahrens nicht detektiert. Der Versuchsablauf ist in der nachfolgenden Tabelle zusammengefaßt.

| Tag der Tocknung | Gehalt an Trockensubstanz [%] | pH-Wert des Klärschlamms | Zahl coliformer Keime [MPN] | Salmonellen |
|---|---|---|---|---|
| 1 | 28 | 7,7 | 8,1 × 10⁶ | positiv |
| 16 | 64 | 7,2 | 6,4 × 10³ | positiv |
| 17 | 65 | 12,4 | Nicht gemessen | nicht gemessen |
| 22 | 89 | 12,1 | << 1 × 10³ | negativ |

## Patentansprüche

1. Verfahren zum Hygienisieren eines organischen Reststoffs durch eine Erhöhung des pH-Werts und/oder der Temperatur, **dadurch gekennzeichnet, dass** in dem organischen Reststoff enthaltene potentiell Ammoniak bildende Stickstoffverbindungen vor der Erhöhung des pH-Werts und/oder der Temperatur weitgehend durch eine bei einer Trocknung des organischen Reststoffs mittels Luft erfolgende aerobe Behandlung des organischen Reststoffs entfernt oder umgesetzt werden, wobei der organische Reststoff durch Einblasen von Luft und/oder durch häufiges Wenden oder Auflockern mit einer großen Menge Luft in Kontakt gebracht wird.

2. Verfahren nach Anspruch 1, **dadurch gekennzeichnet, dass** der organische Reststoff vor dem Hygienisieren mechanisch entwässert wird.

3. Verfahren nach Anspruch 1 oder 2, **dadurch gekennzeichnet, dass** dem organischen Reststoff zur Erhöhung des pH-Werts ein Zuschlagstoff, insbesondere gebrannter oder gelöschten Kalk, zugesetzt wird.

4. Verfahren nach einem der vorhergehenden Ansprüche, **dadurch gekennzeichnet, dass** dem organischen Reststoff ein das Umsetzen der potentiell Ammoniak bildenden Stickstoffverbindungen bewirkender Stoff zugesetzt wird, wobei es sich bei dem Stoff um ein Enzym, um einen die potentiell Ammoniak bildenden Stickstoffverbindungen oxidierenden Stoff oder um einen Mikroorganismus handelt.

5. Verfahren nach einem der vorhergehenden Ansprüche, **dadurch gekennzeichnet, dass** der organische Reststoff einer thermischen und/oder solaren Behandlung unterzogen wird.

6. Verfahren nach einem der vorhergehenden Ansprüche, **dadurch gekennzeichnet, dass** der organische Reststoff nach der Trocknung einen Gehalt an Trockensubstanz von 30 % bis 90 %, insbesondere 40 % bis 90 %, aufweist.

7. Verfahren nach Anspruch 6, **dadurch gekennzeichnet, dass** nach der Trocknung die Erhöhung des pH-Werts durch Zusatz von 0,05 kg bis 0,5 kg, vorzugsweise 0,1 kg bis 0,3 kg, gebranntem Kalk pro Kilogramm Trockensubstanz bewirkt wird.

8. Verfahren nach einem der Ansprüche 3 bis 7, **dadurch gekennzeichnet, dass** das Zusetzen des Zuschlagstoffs und/oder des das Umsetzen der potentiell Ammoniak bildenden Stlckstoffverbindungen bewirkenden Stoffs durch großflächiges Verteilen auf dem organischen Reststoff und Einmischen erfolgt.

9. Verfahren nach einem der vorhergehenden Ansprüche, **dadurch gekennzeichnet, dass** die Trocknung in einer Trocknungsvorrichtung bewirkt wird.

10. Verfahren nach Anspruch 9, **dadurch gekennzeichnet, dass** in der Trocknungsvorrichtung das Trocknen durch die aerobe Behandlung und durch Sonnenenergie bewirkt wird.

11. Verfahren nach einem der Ansprüche 1 bis 8, **dadurch gekennzeichnet, dass** die aerobe Behandlung durch Wenden oder Auflockern des organischen Reststoffs durch eine Misch- oder Wendevorrichtung bewirkt wird.

## Claims

1. Method for a hygienization of an organic residue by increasing the pH value and/or the temperature, **characterized in that** nitrogen compounds contained in the organic residue which nitrogen compounds have the potential to generate ammoniac are removed or converted to a great extent, before the increase in the pH value and/or in the temperature, by an aerobic treatment of the organic residue while the organic residue is being air-dried, wherein the organic residue is brought into contact with a large amount of air due to the blowing in of air and/or by frequent turning over or loosening up.

2. Method as defined in claim 1, **characterized in that** the organic residue is mechanically dehydrated before hygienization.

3. Method as defined in claim 1 or 2, **characterized in that** an aggregate, in particular burnt or slaked lime, is added to the organic residue to increase the pH value.

4. Method as defined in one of the preceding claims, **characterized in that** a material is added to the organic residue, which material causes the conversion of the nitrogen compounds which nitrogen compounds have the potential to generate ammoniac, wherein the material is an enzyme, a material that oxidizes the nitrogen compounds that have the potential to generate ammoniac, or a microorganism.

5. Method as defined in one of the preceding claims, **characterized in that** the organic residue is subjected to a thermal and/or solar treatment.

6. Method as defined in one of the preceding claims, **characterized in that**, after drying, the organic residue has a dry substance content of 30% to 90%, in particular 40% to 90%.

7. Method as defined in claim 6, **characterized in that**, after drying, the increase in the pH value is achieved by the addition of 0.05 kg to 0.5 kg, preferably 0.1 kg to 0.3 kg of burnt lime per kilogram of dry substance.

8. Method as defined in one of the claims 3 to 7, **characterized in that** the addition of the aggregate and/or the material causing the conversion of the nitrogen compounds which nitrogen compounds have the potential to generate ammoniac, occurs by extensive distribution over the organic residue and blending in.

9. Method as defined in one of the preceding claims, **characterized in that** the drying is caused in a drying device.

10. Method as defined in claim 9, **characterized in that** drying in the drying device is caused by the aerobic treatment and by solar energy.

11. Method as defined in one of the claims 1 to 8, **characterized in that** the aerobic treatment is caused by turning over or loosening up the organic residue with a mixing or turning device.

## Revendications

1. Procédé de hygiénisation d'un résidu organique par une augmentation de la valeur de pH et/ou de la température, **caractérisé en ce que** des composés d'azote contenus dans le résidu organique formant éventuellement de l'ammoniac sont essentiellement éliminés ou convertis avant l'augmentation de la valeur de pH et/ou de la température par un traitement aérobie du résidu organique s'effectuant au moyen d'air lors d'un séchage du résidu organique, dans lequel le résidu organique est amené en contact avec une grande quantité d'air par injection d'air et/ou par rotation ou aération fréquente.

2. Procédé selon la revendication 1, **caractérisé en ce que** le résidu organique est déshydraté mécaniquement avant la hygiénisation.

3. Procédé selon la revendication 1 ou 2, **caractérisé en ce qu'**un agrégat, notamment de la chaux vive ou éteinte, est ajouté au résidu organique en vue de l'augmentation de la valeur de pH.

4. Procédé selon l'une quelconque des revendications précédentes, **caractérisé en ce qu'**une substance entraînant la conversion des composés d'azote formant éventuellement de l'ammoniac est ajoutée au résidu organique, dans lequel il s'agit pour la substance d'une enzyme, d'une substance oxydant les composés d'azote formant éventuellement de l'ammoniac ou d'un microorganisme.

5. Procédé selon l'une quelconque des revendications précédentes, **caractérisé en ce que** le résidu organique est soumis à un traitement thermique et/ou solaire.

6. Procédé selon l'une quelconque des revendications précédentes, **caractérisé en ce que** le résidu organique présente après le séchage une teneur en substance sèche de 30% à 90%, notamment de 40% à 90%.

7. Procédé selon la revendication 6, **caractérisé en ce que** l'augmentation de la valeur de pH est entraînée par l'ajout de 0,05 kg à 0,5 kg, de préférence 0,1 kg à 0,3 kg, de chaux vive par kilogramme de substance sèche après le séchage.

8. Procédé selon l'une quelconque des revendications 3 à 7, **caractérisé en ce que** l'ajout de l'agrégat et/ou de la substance entraînant la conversion des composés d'azote formant éventuellement de l'ammoniac s'effectue par distribution sur une grande surface sur le résidu organique et incorporation.

9. Procédé selon l'une quelconque des revendications précédentes, **caractérisé en ce que** le séchage est effectué dans un dispositif de séchage.

10. Procédé selon la revendication 9, **caractérisé en ce que** le séchage est effectué par le traitement aérobie et par énergie solaire dans le dispositif de séchage.

11. Procédé selon l'une quelconque des revendications 1 à 8, **caractérisé en ce que** le traitement aérobie est effectué par rotation ou aération du résidu organique par un dispositif de mélange ou de rotation.
